Europäisches Patentamt

European Patent Office

Office européen des brevets

(19)

(11) Publication number: **0 038 612**
**B1**

(12) **EUROPEAN PATENT SPECIFICATION**

(45) Date of publication of patent specification: **07.12.83**

(51) Int. Cl.³: **B 01 D 13/00**

(21) Application number: **81200531.2**

(22) Date of filing: **13.09.79**

(60) Publication number of the earlier application in accordance with Art. 76 EPC: **0009374**

(54) **Hollow filament separatory modules.**

(30) Priority: **19.09.78 US 943793**
**19.09.78 US 943738**
**19.09.78 US 943739**
**30.10.78 US 956032**

(43) Date of publication of application:
**28.10.81 Bulletin 81/43**

(45) Publication of the grant of the patent:
**07.12.83 Bulletin 83/49**

(84) Designated Contracting States:
**AT BE CH DE FR GB IT LU NL**

(56) References cited:
**US - A - 3 422 008**
**US - A - 3 442 389**
**US - A - 3 870 637**

(73) Proprietor: **ALBANY INTERNATIONAL CORP.**
**1 Sage Road**
**Menards New York 12201 (US)**

(72) Inventor: **Bilewski, Fred**
**13 Oak Street**
**Medway Massachusetts 02053 (US)**
Inventor: **Burchesky, Robert D.**
**15 Corbett Avenue**
**Dedham Massachusetts 02026 (US)**
Inventor: **Coplan, Myron J.**
**47 Speen Street**
**Natick Massachusetts 01760 (US)**
Inventor: **Sebring, Robert E.**
**17 Orchard Circle**
**Westwood Massachusetts 02090 (US)**

(74) Representative: **Jennings, Roy Alfred et al,**
**GILL JENNINGS & EVERY 53-64 Chancery Lane**
**London WC2A 1HN (GB)**

Courier Press, Leamington Spa, England.

# Hollow filament separatory modules

The use of permeable or semi-permeable membranes to effect separation of gas/gas, liquid/liquid, and liquid/solid mixtures and solutions has achieved general industrial applicability. In general, membranes are contained in vessels called modules, comprising a container having various inlet and outlet ports and an assembly of membranes within said container. The internal configurations of the membranes and of the vessel are so arranged as to permit the introduction of a feed stream under pressure on the upstream faces of the membranes and to include means for collecting permeate which passes through the membranes and emerges on their downstream faces, and means are provided for keeping feed and permeate materials from commingling.

Membranes have been fabricated in the form of open-ended hollow tubular filaments so arranged and sealed into header plates as to provide a separation of the flow over the external surfaces of the hollow filaments from the flows within the bores of the hollow filaments. These devices are called hollow filament separatory modules.

There is a very substantial pressure differential between the fluid flowing over the external surfaces of the filaments and the flows within the filaments which lead to a collection chamber. The present invention provides an improved sealing arrangement which ensures that there is no leakage within the module from the high pressure flow to the low pressure flow in a hollow filament separatory module which includes in combination an annulus of filaments consisting of a plurality of layers of semi-permeable helically wound hollow filaments having open ends and a main portion, a pressure housing enclosing said filaments, a zone, which, when the module is in use, is pressurized, first flow means in said zone for causing fluid to flow in contact with the outer surfaces of said filaments at the main portions thereof, a collection zone of said housing, an outlet from said collection zone to allow fluid to flow from within said hollow filaments through the open ends thereof and through and out of said zone, which in use is pressurised, potting compound encapsulating said hollow filaments between said zone, which in use is pressurised, and said collection zone and first and second O-rings forming seals between said housing and said potting compound.

US—A—3,442,389 discloses a hollow filament separator module in which a bundle of hollow filaments are enclosed within a pressure housing an seals are provided for sealing a space within the housing in communication with the outside surfaces of the hollow filaments from a further space within the housing which communicates with the insides of the hollow filaments. Two seals are each formed by a plug of epoxy resin which is cast in situ in the housing and produces the seal by being bonded directly to the side surfaces of the hollow filaments on the one hand and to the internal surface of the wall of the housing on the other hand.

The bonds produced between epoxy resin and a surrounding metal housing are frequently able to stand up mechanically to substantial forces, but such bonds are notoriously subject to failure when subjected to substantial liquid pressures. There is therefore a very great risk of leakage taking place between the high pressure and low pressure spaces within the housing in the module shown in US—A—3,442,389.

US—A—3,422,008 discloses a hollow filament separatory module which includes the combination described above, but here again the seal, which is provided by the two O-rings is not satisfactory. This is because any leakage which may take place past the first O-ring rapidly builds up a pressure on the second O-ring which may then itself leak and allow the fluid which flows from within the hollow filaments to become vitiated by the unseparated fluid which flows in contact with the outer surfaces of the filaments.

The object of this invention is to improve the seal provided by the two O-rings in a module which includes the above combination, so that leakage of the unseparated fluid past the seal into the collection zone is completely prevented.

To this end, according to this invention, such a module is characterised in that said first and second O-rings separate an intermediate zone around said potting compound from said zone, which in use is pressurised, and said collection zone, and weep hole port means are provided between said first and second O-rings for venting said intermediate zone.

Preferably the housing comprises an enclosure surrounding said annulus, first and second end plates with said enclosure therebetween, first and second shoulders respectively formed on said first and second end plates and bolt means rigidly fixing said end plates to one another with respective ends of said enclosure butting said first and second shoulders.

The enclosure may comprise a pressure sleeve enclosing said collection zone and a shell surrounding said main portions, a part of said sleeve overlying said shell, said first and second O-rings forming seals between said sleeve and said potting compound.

The invention will be further described by way of example with reference to the accompanying drawings which is a partially sectional longitudinal view of the module.

A module constructed in accordance with this invention is designated in the drawings, generally by the numeral 20. The module includes an annulus 22 formed of wound permeable hollow filaments and braid sleeve 26 folded over to sandwich the filaments for the most part between inner and outer sleeve sections 26a and 26b with solid rod 28 projecting within and occupying annulus core 30.

The specific manner in which the annulus is wound is described in detail below. The fibres which are of relatively large diameter are wound in helical fashion with adjacent layers wound in opposite hand. There is relatively uniform distribution of the large diameter fibres and the channel spaces and surfaces of the fibres usable for separation. In the preferred embodiment the hollow fibres are 250 micrometres or greater in outside diameter. In certain applications 500 micrometres outside diameter is preferred. Although any suitable hollow fibre can be used, the preferred embodiment contemplates a composite hollow fibre comprising a porous substrate, overcoated with a selected high filtration rejection barrier.

The annulus 22 is encased within pressure resistant shell 32 and pressure sleeve 34 between end plates 36 and 38 held in position by stringers 40 passing through holes 42 formed in the end plates. Axial feed-in port 44 is provided in end plate 36 to allow the fluid which is being operated upon to wash the outside of the fibres 22 after passing through prefilter 46 and perforated disc 48. In certain applications either or both prefilter 46 and disc 48 can be omitted. In the preferred embodiment prefilter 46 is a felt structure through which the liquid can pass and disc 48 is a rigid plastic member.

The pressure sleeve 34 is provided with radial ports 50 and 52 which respectively provide outlets for permeate and concentrate. Port 54 functions as a weep hole. Suitable O-rings 56, 58, 60, 62 and 64 are provided. The end of the annulus 22 within pressure sleeve 34 is encased in potting compound 66 as will be described below.

Collapsible expansible braided sleeve 26 is secured over a suitable winding shaft for a distance greater than the axial length of the annulus to support the inner surface of the annulus. This is the surface immediately upon which the first wraps of the bundle 22 are wound. An additional length of expansible sleeve sufficient to provide a continuous protective surface for the external surface of the annulus, rolled around one end of the annulus, is provided.

Upon completion of the winding operation the outer end 26b of the braid is wrapped over the annulus 22 with the inner end 26a of the braid left within and the mandrel 68 removed exposing bore 30.

After winding, one end of annulus 22 is encapsulated in potting compound 66. The art of casting fibrous and other materials into a common matrix is well known and referred to as "potting". It is also well known to select potting compounds of which epoxies are but one example, so that their compatibility with fibres or other materials to be encapsulated makes for intimate bonding in the interfaces between the fibres or particles, and the encapsulating compound. Thus, in the case of hollow fibres to be sealed in the potting compound 66 it would be most desirable that the fibre surfaces to wet well by the potting compound in its prepolymerised fluid form.

After potting the fibres of the annulus must be opened so that permeate within the individual bores thereof can be received and collected in the collection chamber or annular gallery 71 provided in the mould potting compound, for removal through port 50.

The ends of fibres which are cut or exposed to provide exit for the permeate flow are in access surfaces within the potting compound at either a different elevation or a different angle than the surface of the potting compound required to take the pressurising thrust force, or both.

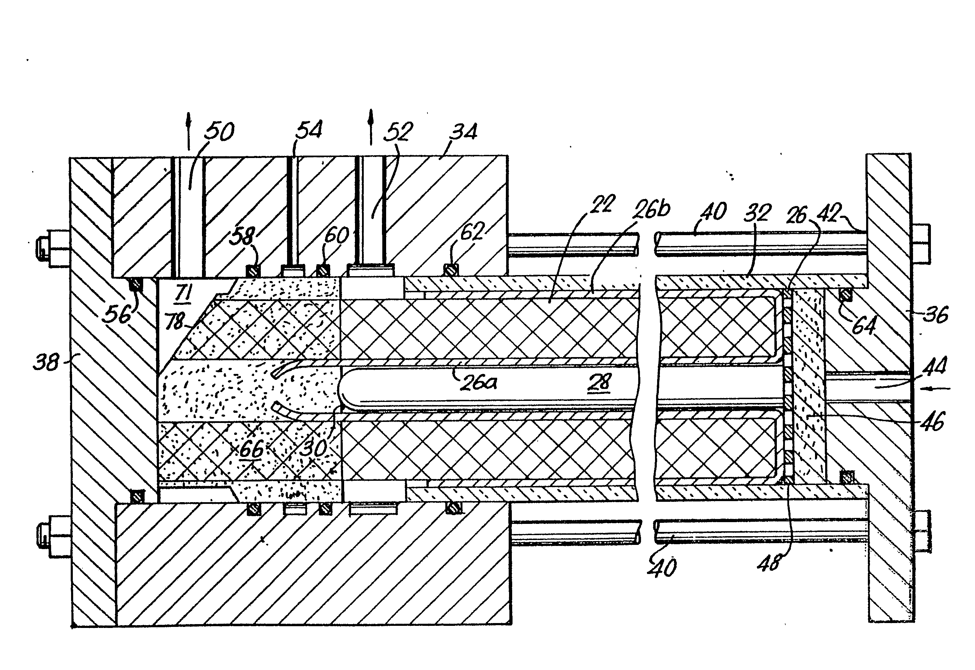

We have found that if a number of angular slices 78 are made into the end of the cylinder of fibre-containing potting, connecting points near the centre of the end face of the potting compound upwardly and outwardly with points in the surface 71 of the annular gallery of the potting providing continuous channels connecting the end face and the surface 71 and providing an apex in the slice along 78 as seen in the Figure, all fibres will have open ends exposed to gallery 71.

In the subject invention the permeate collection chamber 75 is sealed apart from the pressurised concentrate region of the potting compound by "O"-rings 56 and 58 with weephole 54 additionally protected by O-ring seal 60 to allow any leak of concentrate to exit the module assembly without inadvertently commingling with the permeate. The pressurised concentrate is removed at port 52 which is sealed by O-rings 60 and 62. Although the "O"-rings are hidden during operation of the module, any leakage past them can readily be detected and corrective action taken.

The O-rings 58 and 60 define an intermediate zone between the collection zone containing the collection chamber 71 and the pressurized zone which is surrounded by the pressure resistant shell 32.

In the prior art modules the pressure shell has been a cylindrical chamber in view of the accepted manner of resisting the high hydrostatic pressures. The requirement has been imposed on the shell to accept both the hoop stress loadings and axial loading developed by connections to the end plates. In addition, the end plates were frequently mounted to the shell and connected by snap rings or the like, which carried the thrust on the end plates to shell surface through grooves or some other connective ridges or the like. This required that the shell be of substantial thickness and mechanical integrity in all directions. Stringer bolts 40 secure the two end plates 36 and 38 of the pressure cylinder to one another, thereby eliminating axial stress on the shell. By use of these stress-bearing stringer members, problems associated with connecting end plates to the shell by snap rings and the like are also eliminated. These features allow for simpler fabrication of the shell itself and the assembly and disassembly of the entire system, as well as access to its internal parts.

## Claims

1. A hollow filament separatory module including in combination an annulus (22) of filaments consisting of a plurality of layers of semi-permeable helically wound hollow filaments having open ends and main portions, a pressure housing (32, 34) enclosing said filaments, a zone, which, when the module is in use, is pressurized, first flow means (44, 56) in said zone for causing fluid to flow in contact with the outer surfaces of said filaments (22) at the main portions thereof, a collection zone (71) of said housing, an outlet (50) from said collection zone to allow fluid to flow from within said hollow filaments through the open ends thereof and through and out of said zone, which in use is pressurised, potting compound (66) encapsulating said hollow filaments between said zone, which in use is pressurised, and said collection zone (71), and first and second O-rings (58, 60) forming seals between said housing (34) and said potting compound (66), characterized in that said first and second O-rings (58, 60) separate an intermediate zone around said potting compound (66) from said zone, which in use is pressurized, and said collection zone (71), and weep hole port means (54) are provided between said first and second O-rings, (58, 60) for venting said intermediate zone.

2. A module according to Claim 1, in which the housing comprising an enclosure (32, 34) surrounding said annulus (22), first and second end plates (36, 38) with said enclosure therebetween, first and second shoulders respectively formed on said first and second end plates and bolt means (40) rigidly fixing said end plates (36, 38) to one another with respective ends of said enclosure (32, 34) butting said first and second shoulders.

3. A module according to Claim 2, in which said enclosure comprises a pressure sleeve (34) enclosing said said collection zone and a shell (32) surrounding said main portions, a part of said sleeve (34) overlying said shell (32), said first and second O-rings (58, 60) forming said seals between said sleeve (34) and said potting compound (66).

4. A module according to Claim 2 or Claim 3, in which said bolt means includes stringer bolts (40) extending between said end plates.

5. A module according to any one of Claims 2 to 4, in which a first outlet port (50) for said collection zone (71) and a second outlet port (52) for said pressurised zone are provided in said pressure sleeve (34) with said weep hole port means (54) and said first and second O-rings (58, 60) therebetween.

## Patentansprüche

1. Hohlfasertrennungsmodul mit der Kombination einer Ringspüle (22) an Fasern, bestehend aus einer Vielzahl von Schichten semipermeabler, schraubenförmig gewickelter Hohlfasern, die offene Enden und Hauptteile besitzen, ein Druckgehäuse (32, 34), das diese Fasern umhüllt, einen Bereich, der beim Betrieb des Moduls unter Druck steht sowie erste Durchflüsse (44, 56), die in Kontakt mit den Außenflächen der Fasern an deren Hauptteilen stehen, um einen Strömungsmittelfluß zu bewirken, einen Sammelbereich (71) des Gehäuses, einen Ausgang (50) vom Sammelbereich, damit Strömungsmittel aus dem Inneren der Hohlfasern durch deren offene Enden und durch und aus diesem Bereich fließen kann, der im Betrieb unter Druck steht, wobei die Potting- bzw. Verguß-Verbindung (66) die Hohlfasern zwischen diesem Bereich, der im Betrieb unter Druck steht, umschließt bzw. einkapselt, und wobei die Sammelzone (71), und der erste und zweite O-Ring (58, 60) Dichtungen zwischen dem Gehäuse (34) und der Potting-Verbindung (66) ausbildet, dadurch gekennzeichnet, daß der erste und zweite O-Ring (58, 60) einen Zwischen-bereich um die Potting-Verbindung (66) herum von diesem Bereich, der im Betrieb unter Druck steht, abzutrennen, und daß der Sammelbereich (71) und die Lecklochöffnung (54) zwischen dem ersten und zweiten O-Ring (58, 60) zur Belüftung des Zwischenbereiches vorgesehen sind.

2. Modul nach Anspruch 1, dadurch gekennzeichnet, daß das Gehäuse eine Einfassung (32, 34) umfaßt, die die Ringspule (22), die erste und zweite Endplatte (36, 38) mit der Einfassung dazwischen umgibt, wobei eine erste und zweite Schulter entsprechend auf der ersten und zweiten Endplatte ausgebildet sind und Bolzen (40) die Endplatten (36, 38) miteinander mit den entsprechenden Enden der Einfassung (32, 34), die an die erste und zweite Schulter angrenzt, starr befestigen.

3. Modul nach Anspruch 2, dadurch gekennzeichnet, daß die Einfassung eine Druckhülse (34) unfaßt, die den Sammelbereich und einen Mantel (32), der die Hauptteile umgibt, umhüllt, und daß ein Teil der Hülse (34) den Mantel (32) bedeckt, und daß der erste und zweite O-Ring Dichtungen zwischen der Hülse (34) und der Potting-Verbindung (66) ausbildet.

4. Modul nach Anspruch 2 oder 3, dadurch gekennzeichnet, daß die Bolzen Stringerbolzen (40), umfassen, die sich zwischen den Endplatten erstrecken.

5. Modul nach einem oder mehreren der vorstehenden Ansprüche 2 bis 4, dadurch gekennzeichnet, daß eine erste Auslaßöffnung (50) für den Sammelbereich (71) und eine zweite Auslaßöffnung (52) für den unter Druck stehenden Bereich in der Druckhülse (34) vorgesehen werden, wobei die Lecklochöffnung (54) und der erste und zweite O-Ring (58, 60) dazwischenliegt.

## Revendications

1. Module de séparation à filaments creux comprenant en combinaison un anneau (22) de filaments constitué de plusieurs couches de filaments creux semi-perméables, enroulés en hélice, ayant des extrémités ouvertes et des tronçons principaux, un corps (32, 34) de pression renfermant lesdits filaments, une zone qui, lorsque le module est utilisé, est sous pression, des premiers moyens d'écoulement (44, 56) dans ladite zone pour provoquer l'écoulement d'un fluide en contact avec les surfaces extérieurs des tronçons principaux desdits filaments (22), une zone collectrice (71) dudit corps, une sortie (50) de ladite zone collectrice permettant au fluide de s'écouler de l'intérieur desdits filaments creux par leurs extrémités ouverte et à travers et à l'extérieur de ladite zone qui, en utilisation, est sous pression, un composé (66) d'enrobage recouvrant lesdits filaments creux entre ladite zone qui, en utilisation est sous pression, et ladite zone collectrice (71), et des première et seconde bagues toriques (58, 60) formant des joints entre ledit corps (34) et ledit composé d'enrobage (66), caractérisé en ce que lesdites première et seconde bagues toriques (58, 60) séparent une zone intermédiaire entourant ledit composé d'enrobage (66) de ladite zone qui, en utilisation, est sous pression, et de ladite zone collectrice (71), et des moyens (54) à orifices de barbacanes sont prévus entre lesdites première et seconde bagues toriques (58, 60) pour ventiler ladite zone intermédiaire.

2. Module selon la revendication 1, dans lequel le corps comprend une enveloppe (32, 34) entourant ledit anneau (22), des première et seconde plaques extrêmes (36, 38) entre lesquelles ladite enveloppe est disposée, des premier et second épaulements formés respectivement sur lesdites première et seconde plaques extrêmes et des boulons (40) fixant rigidement lesdites plaques extrêmes (36, 38) l'une à l'autre, les extrémités correspondantes de ladite enveloppe (32, 34) butant contre lesdits premier et second épaulements.

3. Module selon la revendication 2, dans lequel ladite enceinte comprend une virole (34) de pression renfermant ladite zone collectrice et une enveloppe (32) entourant lesdits tronçons principaux, une partie de ladite virole (34) recouvrant ladite enveloppe (32), lesdites première et seconde bagues toriques (58, 60) formant lesdits joints entre ladite virole (34) et ledit composé d'enrobage (66).

4. Module selon la revendication 2 ou la revendication 3, dans lequel lesdits boulons comprennent des tirants (40) s'étendant entre lesdites plaques extrêmes.

5. Module selon l'une quelconque des revendications 2 à 4, dans lequel un premier orifice (50) de sortie pour ladite zone collectrice (71) et un second orifice (52) de sortie pour ladite zone sous pression sont prévus dans ladite virole (34) de pression, lesdits moyens à orifices (54) formant barbacanes et lesdites première et seconde bagues toriques (58, 60) étant disposés entre eux.

0 038 612